# EUROPEAN PATENT APPLICATION

(11) **EP 4 821 601 A1**
(43) Date of publication of application: **14.10.2026**
(21) Application number: 25170023.3
(22) Date of filing: 11.04.2025
(51) Int. Cl.: B01L 3/02, B01L 3/00, B01L 9/00

(54) **LIQUID CONTAINER ARRANGEMENT, ROBOTIC LIQUID HANDLING SYSTEM AND METHOD FOR HANDLING LIQUIDS**

(71) Applicant: Leica Microsystems CMS GmbH, 35578 Wetzlar (DE)
(72) Inventor: Tille, Sebastian, 35578 Wetzlar (DE)
(74) Representative: Schaumburg und Partner Patentanwälte mbB

(57) **Abstract**

A liquid container arrangement (106) is configured to be used in a robotic liquid handling system (100) for handling liquids which are to be applied to a sample (110). The liquid container arrangement (106) comprises a plurality of container sub-units (220), with at least some of the container sub-units (220a, 220b, 220c) having different liquid storage capacities. The liquid container arrangement (106) comprises a one-piece frame element (218) having said plurality of container sub-units (220) formed therein.

## Description

### Technical field

The invention relates to a liquid container arrangement, a robotic liquid handling system and a method for handling liquids using a robotic liquid handling system.

### Background

In life sciences, robotic liquid handling systems may be used to automate dispensing, transferring, and mixing of liquids, ensuring accuracy and reproducibility in laboratory workflows, for example in applications such as sample preparation, assay setup, and high-throughput screening. These systems may be provided with robots and automated pumps that are capable of handling liquids. This is a significant improvement over, for example, manual pipetting, as automation enables faster, more precise and less error-prone liquid handling.

However, automated systems known in the art often only mimic the manual approach by using the same components and only providing for the automated use of these components. As a result, the conventional approach to automation is associated with compromises in terms of the complexity of the system setup and the time required for liquid handling.

### Summary

It is an object to provide a liquid container arrangement, a robotic liquid handling system, and a method which enable efficient liquid handling.

The afore-mentioned object is achieved by the subject-matter of the independent claims. Further embodiments are defined in the dependent claims and the following description.

The liquid container arrangement disclosed herein is configured to be used in a robotic liquid handling system for handling liquids which are to be applied to a sample. The liquid container arrangement comprises a plurality of container sub-units, with at least some of the container sub-units having different liquid storage capacities. The liquid container arrangement comprises a one-piece frame element having said plurality of container sub-units formed therein.

To mix larger volumes of relatively inexpensive liquids such as dilution buffers with smaller volumes of very expensive reagents such as liquid antibody reagents, it might be envisioned to place small volumes of expensive reagents in wells of a uniform multi-well plate, i.e. a plate having a plurality of identical wells, and to mix them with the inexpensive liquids stored in laboratory bottle containers. In such a configuration, a pipetting robot and a pump have to work together when one of the liquids stored in the multi-well plate is to be mixed with a liquid from one of the bottle containers. The pump must first deliver the liquid from the bottle container to the pipetting robot which then moves over the multi-well plate and dispenses the liquid from the bottle container into one of the wells in order to mix it with the liquid reagent in the well. The required interaction between the pipetting robot and the pump results in a mixing process that takes comparatively long time.

In contrast, the approach disclosed herein enables a mixing process that does not require additional bottle containers. For this purpose, multiple container sub-units with different liquid storage capacities are provided in the form of a one-piece frame element, which makes it possible to store both larger and smaller volumes of liquids in a single container component that is adapted to cooperate with a pipetting robot in a liquid handling system. More expensive liquids, which are usually provided in smaller volumes, can be stored in smaller container sub-units having smaller storage capacities, while cheaper liquids, which are often provided in larger volumes, can be stored in larger container sub-units of the one-piece frame element. In particular, in cyclic applications where, for example, a sample is repeatedly stained, imaged and destained, the mixing of the liquids can be carried out more quickly because the liquid handling system does not have to use a pump to access a bottle container. Instead, the mixing is done entirely by the pipetting robot, which only accesses liquids stored in the one-piece frame element. The pipetting robot aspirates a liquid from one of the container sub-units and dispenses the liquid into another.

The one-piece frame element may have a rectangular shape, and the container sub-units may be arranged in the one-piece frame element in a rectangular grid pattern. Such an organized grid pattern makes it easier to access the liquids stored in the liquid container arrangement.

According to an embodiment, the liquid container arrangement comprises multiple container groups, each container group including one or more of the container sub-units. The container sub-units of each container group may have the same liquid storage capacity, while the container sub-units of different container groups may have different liquid storage capacities. By dividing the one-piece frame element into the afore-mentioned container groups, a compact arrangement with different liquid storage capacities is provided, which can be used to accelerate a robot-controlled mixing process.

The container sub-units of each container group may be located adjacent to each other. In this embodiment, container sub-units of the same size form a spatially coherent container group which enables a well-organized distribution of the various liquids and optimized use of space, i.e. a maximum number of container sub-units per area of the one-piece frame element.

In addition or as an alternative, the container sub-units of each container group may have the same shape, while the shapes of the container sub-units may differ between at least two of the container groups. For example, most container sub-units forming a specific container group may have a circular shape, while there may be one or several other container groups including one or more container sub-units with a non-circular, e.g. an approximately rectangular or square shape. The shape mentioned above refers to a top view. Providing larger container sub-units with a non-circular shape enables a space/volume optimization of these sub-units which means that the available space provided by the one-piece frame element is utilized efficiently to accommodate the larger container sub-units between the smaller circular container sub-units. It should be noted that this configuration is only an example. All container sub-units, regardless of their size, may also be uniform in shape, e.g. circular or oval.

In addition or as an alternative, at least one of the container groups may include one single container sub-unit, the liquid storage capacity of said single container sub-unit being greater than the liquid storage capacity of the container sub-units of at least one of the other container groups. For example, in this configuration, a single rectangular container sub-unit, which differs in size from the other container sub-units, can be arranged in a particularly space-saving way between smaller, circular container sub-units. There may also be several such individual container sub-units of different sizes.

According to an embodiment, the one-piece frame element is a multi-well plate comprising a plurality of wells, each well forming one of the container sub-units. Thus, a non-uniform multi-well plate is provided which may be a single piece of material produced, for example, by injection molding.

The wells included in at least one of the container groups, preferably in each container group, may be arranged at a center-to-center spacing which is based on a standardized spacing. For instance, the Society of Biomolecular Sciences (SBS) provides so-called ANSI standards, according to which multi-well plates are standardized, inter alia, in terms of the positions at which the wells are arranged on the plate. For example, there are standardized formats such as 96-well, 384-well, and 1536-well plates with uniform length (127.76 mm) and width (85,48 mm), each of these formats having a specific center-to-center spacing between their wells. In 1536-well plates, 32 x 48 wells are arranged at a center-to-center spacing of 2.25 mm. In 384-well plates, 16 x 24 wells are arranged at a center-to-center spacing of 4.50 mm, which is 2 x 2.25 mm. In 96-well plates, 8 x 12 wells are arranged at a center-to-center spacing of 9.00 mm, which is 4 x 2.25 mm. Accordingly, in this example, the standardized center-to-center spacings of 4.50 mm and 9,00 mm, respectively, are multiples of the likewise standardized spacing of 2.25 mm.

The configuration according to this embodiment can also be based on standard formats having wells which are larger than the wells that are used in the formats indicated above. For instance, in addition to a 96-well plate format, a 24-well plate format and a 6-well plate format may be applied. Just as a specific example, a non-uniform multi-well plate may comprise a first well group including multiple smaller wells arranged at a first center-to-center spacing of 9.00 mm which corresponds to a standardized 96-well format, a second well group including less medium sized wells arranged at a second center-to-center spacing of 19.30 mm, which corresponds to a standardized 24-well plate format, and a third well group including a single well which is configured according to a standardized 6-well plate format.

In any case, unlike conventional multi-well plates in which all wells are arranged at the same center-to-center spacing, the multi-well plate disclosed herein comprises container or well groups with different center-to-center spacings. Thus, the respective well group may be configured to correspond to a subsection of a standard multi-well plate, wherein the configuration is not limited to the standardized formats mentioned above.

The use of a non-uniform multi-well plate, which comprises several well groups that are standardized when considered individually, facilitates an interaction with a pipetting robot, thus enhancing efficiency in an automated liquid handling workflow, e.g. by minimizing the number of moving steps of the pipetting robot to access wells with liquids used in one workflow or assay.

According to another aspect, a robotic liquid handling system is provided for handling liquids which are to be applied to a sample. The robotic liquid handling system comprises a liquid container arrangement as described above and a pipetting robot having a syringe which is configured to aspirate liquid from and dispense liquid into the container sub-units of the liquid container arrangement.

The syringe of the pipetting robot may comprise a guiding sleeve which is configured to guide the syringe into each container sub-unit. In particular, the guiding sleeve serves to arrange a tip portion of the syringe at a center of the respective container sub-unit so that the liquid can be accurately filled into or aspirated from the container sub-unit.

The container sub-units may be adapted in shape to the syringe of the pipetting robot. For example, each container sub-unit may have a bottom portion with a blunt cross-section adapted to a blunt cross-section of a tip portion of the syringe. This will prevent damage to the container sub-unit when the syringe is inserted into the container sub-unit.

The robotic liquid handling system may comprise a control unit which is configured to control the pipetting robot in accordance with a predetermined liquid mixing protocol defining multiple mixing steps to be executed successively by the pipetting robot.

When using such a liquid mixing protocol, the container sub-units may be located in the one-piece frame element according to the protocol to minimize a travel path of the syringe of the pipetting robot in the successively executed mixing steps. This makes the mixing process particularly efficiently.

The robotic liquid handling system may further comprise a pump system configured to apply the liquids from the liquid container arrangement to the sample. However, as mentioned above, the pump system is not necessary for the actual mixing process, since all the liquids needed for this process can be stored in the liquid container arrangement as disclosed herein.

The liquid container arrangement may be pre-filled with liquids. Thus, at least one or more of the wells may contain a liquid. In this embodiment, the pre-filled wells may be sealed on their upper side with a foil. Such a foil prevents evaporation of the liquids, which is particularly advantageous when expensive liquids are pre-filled into the liquid container arrangement. Furthermore, the foil may be configured so that it can be pierced by the pipette or syringe to access the liquid contained in a particular well. A liquid container arrangement sealed with a foil can also be shipped securely, optionally in cooled packages.

According to another aspect, a method for handling liquids using the robotic liquid handling system is provided. The method comprises the following steps: distributing different types of liquids in the liquid container arrangement such that each liquid is introduced, depending on its type, into at least one of the container sub-units whose liquid storage capacity is assigned to the introduced type of liquid; and mixing the different types of liquids by causing the pipetting robot to aspire the liquid stored in one of the container sub-units and dispense the aspired liquid into another of the container sub-units.

The method may be part of a workflow including, for example, cyclic multiplexed immuno-fluorescence imaging. According to such a workflow, the sample is stained, imaged, and inactivated in multiple cycles.

A mixture may be generated by causing the pipetting robot to mix the different types of liquids stored in the liquid container arrangement, and the mixture may then be applied to the sample by means of a pump system. Here, it is to be noted that the mixture may consist exclusively of the liquids stored in the container sub-units. In particular, no liquid from bottle containers is needed.

The different types of liquids may comprise at least two types of liquids, a first type including at least one of a staining reagent such as an antibody reagent and an inactivation reagent, and a second type including at least one of a dilution buffer, a wash buffer, an imaging buffer. The container sub-units storing the first type of liquids have a smaller storage capacity than the container sub-units storing the second type of liquids.

### Short Description of the Figures

Hereinafter, embodiments are described referring to the drawings, wherein:
- Figure 1: is a schematic diagram showing a robotic liquid handling system according to an embodiment;
- Figure 2: shows a one-piece frame element of a liquid container arrangement according to an embodiment, the one-piece frame element being used in the robotic liquid handling system;
- Figure 3: shows a one-piece frame element according to a modified embodiment;
- Figure 4: shows a one-piece frame element according to another modified embodiment;
- Figure 5: shows specific examples of a well profile;
- Figure 6: shows a specific example of a profile of a syringe adapted to the well profile; and
- Figure 7: shows a flow diagram for a method using the robotic liquid handling system according to an embodiment.

### Detailed Description of the Figures

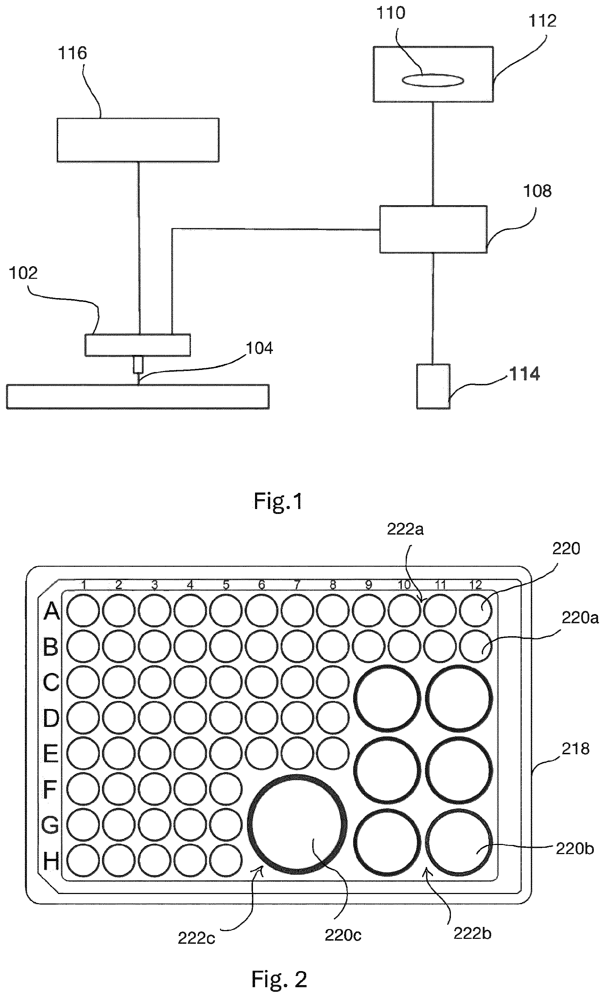

Figure 1 shows a robotic liquid handling system 100 according to an embodiment in a schematic diagram. It is to be noted that Figure 1 shows only those components of the robotic liquid handling system 100 that contribute to an understanding of the embodiment, and the robotic liquid handling system 100 may include additional components not shown in Figure 1.

The robotic liquid handling system 100 may be configured to automate a liquid handling workflow in the field of spatial biology. In particular, the robotic liquid handling system 100 can be used to automate dispensing, transferring, and mixing of liquids in a workflow including cyclic multiplexed immuno-fluorescence imaging.

The robotic liquid handling system 100 comprises a pipetting robot 102 capable of performing precise pipetting tasks in high-throughput experiments. More specifically, the pipetting robot 102, shown only schematically in Figure 1, may include a syringe 104 configured to aspirate and dispense liquids from and into a liquid container arrangement 106 described in more detail below. For this purpose, the pipetting robot 102 is moved across the liquid container arrangement 106.

The robotic liquid handling system 100 may further comprise a pump system 108 which is connected to the pipetting robot 102. The pump system 108 serves to apply liquids aspirated by the pipetting robot 102 from the liquid container arrangement 106 to a sample 110 which may be examined, for example, by means of a flow cell 112.

The pump system 110 may further be connected to one or more bottle containers generally referred to as 114 in Figure 1. This configuration allows liquids to be supplied from the bottle containers 114 via the pump system 110 and the pipetting robot 102 to the liquid container arrangement 106. However, as will become evident from the following description, the bottle containers 114 are not required for the liquid mixing process to be considered in the present context.

A control unit 116 is configured to control an overall operation of the robotic liquid handling system 100. In particular, the control unit 116 causes the pipetting robot 102 to move across the liquid container arrangement 106 and to aspirate and dispense the liquids as provided in the workflow. More specifically, the control unit 116 may be configured to control the pipetting robot 102 according to a predefined liquid mixing protocol associated with the specific workflow. According to the embodiment shown in Figure 1, the pump system 108 is also controlled by the control unit 116.

Figure 2 shows a specific embodiment of the liquid container arrangement 106 which is only schematically depicted in Figure 1.

The liquid container arrangement 106 comprises a one-piece frame element 218 having a plurality of container sub-units formed therein, the container sub-units being generally referred to as 220 in Figure 2. The container sub-units 220 differ from each other in terms of their capacity for storing liquid. For example, the plurality of container sub-units 220 may include three container types of different sizes, namely smaller container sub-units 220a, medium-sized container sub-units 220b, and one larger container sub-unit 220c. Accordingly, as shown in Figure 2, the liquid container arrangement 106 may comprise multiple container groups 222a, 222b, 222c, wherein each of the container groups 222a, 222b, 222c includes one or more of the container sub-units 220a, 220b, and 220c, respectively, The container sub-units 220a, 220b, 220c of each container group 222a, 222b, and 222c, respectively, have the same size and thus the same liquid storage capacity, while the container sub-units 220a, 220b, 220c differ in terms of their liquid storage capacities between the container groups 222a, 222b, 222c.

The configuration shown in Figure 2 allows different volumes of liquids to be stored in the differently sized container sub-units 220a, 220b, 220c formed in the one-piece frame element 218. For instance, a large volume of liquid can be stored in the large container sub-unit 220c, while smaller or medium liquid volumes can be stored in the container sub-units 220a, 220b having lower and medium storage capacities, respectively. Once the one-piece frame element 218 is filled with the required liquids, a liquid mixing process can be carried out by means of the pipetting robot 102 alone, i.e. without using the pump system 108. For this, the control unit 116 causes the pipetting robot 108 to move over the one-piece frame element 218, drawing liquid from one of the container sub-units and dispensing it into another. As a result, for example in cyclic applications in which the sample 110 is repeatedly stained, imaged and destained, the mixing process can be carried out quickly since the pump system 108 does not need to supply liquid from the bottle containers 114 to the one-piece frame element 218 between successive process cycles.

Assuming a workflow including, for example, cyclic multiplexed immuno-fluorescence imaging, two sets of liquids may be held in the one-piece frame element 218. A first set of liquids is used to stain the sample and may comprise typical staining reagents, dilution buffers, wash buffers, imaging buffers etc. A second set of liquids is used for inactivation and comprises typical inactivation reagents which also may be diluted using a dilution buffer.

Among the above-mentioned liquids, there are some which are relatively cheap and some which are expensive. For example, dilution or wash buffers are cheap, and they are processed in relatively large volumes during the workflow. In contrast, antibody reagents are very expensive, and they are used only in small volumes during the workflow. Against this background, the one-piece frame element 218 is designed for efficient use of liquids in the workflow. Thus, an inexpensive liquid may be stored in the large container sub-unit 220c or in one or more of the medium-sized container sub-units 220b, while a small volume of expensive liquid may be held in one or more of the smaller container sub-units 220a.

In the specific embodiment shown in Figure 2, the third container group 222c is formed from the single container sub-unit 220c having a liquid storage capacity which is greater than the storage capacities of the other container sub-units 220a, 220b. Therefore, the container sub-unit 220c is suitable for providing a large volume of liquid during the workflow, which would otherwise have to be provided from the bottle containers 114.

The container sub-units 220a of the first container group 222a are located adjacent to each other. The same applies to the second container group 222b. The spatially coherent container groups 222a, 222b enable a well-organized distribution of the various liquids.

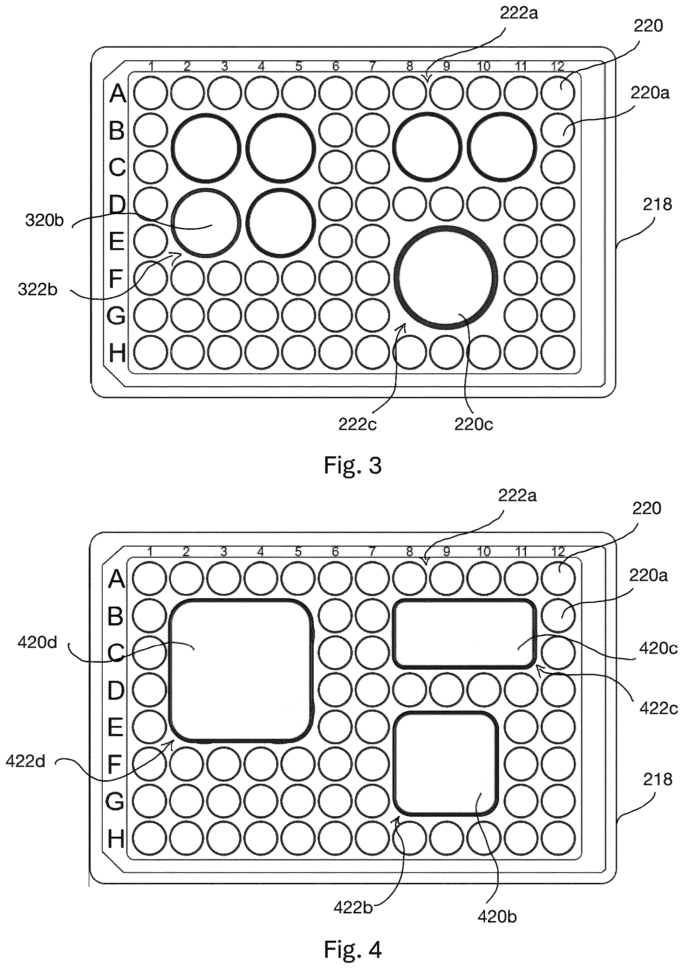

Figure 3 shows another embodiment of the liquid container arrangement 106. The embodiment of Figure 3 is modified compared to the configuration shown in Figure 2. Accordingly, only the differences compared to Figure 2 are explained below.

The modification according to Figure 3 comprises a container group 322b that corresponds to the container group 222b of the configuration shown in Figure 2 and includes container sub-units 322b having the same liquid storage capacity. In contrast to Figure 2, however, the container group 322b does not form a spatially contiguous arrangement in which all container sub-units 320b are arranged next to each other. Rather, the container group 322 is divided into several, e.g. two subgroups.

The modification according to Figure 3 illustrates that the arrangement of the container sub-units can be chosen in accordance with the predefined liquid mixing protocol associated with the specific workflow. For example, the liquid mixing protocol may prescribe an order in which the pipetting robot 102 sequentially approaches the different container sub-units to carry out the desired mixing process. For the example shown in Figure 3, it is assumed that the specific configuration of the container group 322 causes a minimal travel distance of the syringe 104 of the pipetting robot 102 during the mixing process that is defined by the liquid mixing protocol. In other words, the positioning of the container sub-units shown in Figure 3 is throughput-optimized when the liquid mixing protocol is taken into account.

Figure 4 shows another embodiment of the liquid container arrangement 106. The embodiment of Figure 4 is modified compared to the configuration shown in Figure 2. Accordingly, only the differences compared to Figure 2 are explained below.

In the embodiment of Figure 2, the container sub-units 220a, 220b, 220c of each container group 222a, 222b, 222c have the same shape, namely a circular shape in top view. Moreover, in terms of the general circular shape, the different container groups 222a, 222b, 222c do not differ from one another either. In contrast, the modification according to Figure 4 includes, in addition to the container group 222a with its circular container sub-units 220a, three container sub-units 420b, 420c, 420d having a rectangular or square shape in top view. Accordingly, the shapes of the container sub-units differ between the circular container group 222a on the one hand and the rectangular or square container groups 422b, 422c, 422d on the other hand. It should be noted that each of the individual container sub-units 420b, 420c, 420d shown in Figure 4 is considered to be a separate container group 442b, 422c, 422d. However, this is only an example. As in the previous embodiments, the container groups 442b, 442c, 442d may each comprise multiple container sub-units.

In the embodiment of Figure 4, the essentially rectangular or square shape of the container sub-units 420b, 420c, 420d is chosen such that space/volume optimization is achieved by accommodating these larger container sub-units 420b, 420c, 420d in a particularly space-saving manner between the circular smaller container sub-units 220a on the one-piece frame element 218.

In the above configurations of the liquid container arrangement 106, the one-piece frame element 218 may be provided by a unique, non-uniform multi-well plate comprising a plurality of wells, wherein each of these wells forms one of the container sub-units shown in Figures 2 to 4. When considering such an embodiment, the terms "one-piece frame element" and "multi-well plate" may be used synonymously. This also applies to the terms "container sub-unit" and "well".

Referring again to Figure 2, the multi-well plate 218 may have standardized external dimensions. For instance, the multi-well plate 218 may have a length of 127.76 mm and a width of 85.48 mm according to the SBS standard.

In contrast to a conventional multi-well plate with wells of uniform size, the multi-well plate 218 according to the present embodiment offers different liquid storage capacities provided by the differently sized wells 220a, 220b, 220c which are arranged in the well groups 222a, 222b, 222c. The wells 220a of the first well group 222a may be arranged on the multi-well plate 218 according to a standardized 96-well plate format. In particular, a center-to-center-spacing of the wells 220a is based on the 96-well plate format. Correspondingly, the wells 220b of the second well group 222a may be arranged on the multi-well plate 218 according to a standardized 24-well plate format. In particular, the center-to-center-spacing of the wells 220b is based on the 24-well plate format. Finally, the single well 220c may be arranged in accordance with a 6-well plate format.

Based on the configuration explained above, the multi-well plate 218 shown in Figure 2 comprises 63 container sub-units represented by the wells 220a, each well having a liquid storage capacity of up to 2 ml. Further, the multi-well plate 218 comprises six container sub-units represented by the wells 220b, each well 220b having a liquid storage capacity of approximately 15 ml. Finally, the multi-well plate 218 comprises one container sub-unit represented by the single well 220c having a liquid storage capacity of up to 75 ml.

As mentioned above, the external dimensions of the multi-well plate 218 as well as the center-to-center spacings and thus the well positioning within the well groups 222a, 222b may be determined according to a SBS standard. Other features, as the design of the individual wells, e.g. the well depth, may also be standardized.

A standardization, which is related to the individual well groups as explained above, increases the flexibility with which the liquid container arrangement 106 can be used in existing robotic liquid handling systems. As an example, taking into account the standardized center-to-center spacing within the well group 222a, the control unit 116 can control the pipetting robot 102 in a standardized manner to access the individual wells 220a within the well group 222a. In the example of Figure 2, the corresponding well positions are indicated by alphanumeric characters A-H and 1-12 denoting the rows and columns according to the 96-well format.

The above explanations referring to Figure 2 also apply to the modifications of the multi-well plate 218 shown in Figures 3 and 4. Similar to the embodiment in Figure 2, the multi-well plate 218 shown in Figure 3 represents a well arrangement which is a hybrid of the 96-well, 24-well and 6-well formats, with the difference that the well group 322b corresponding to the 24-well format is divided into two subgroups. In contrast, in the embodiment shown in Figure 4, only the first well group 222a corresponds to a standard, whereas the larger wells 422b, 422c, 422d do not.

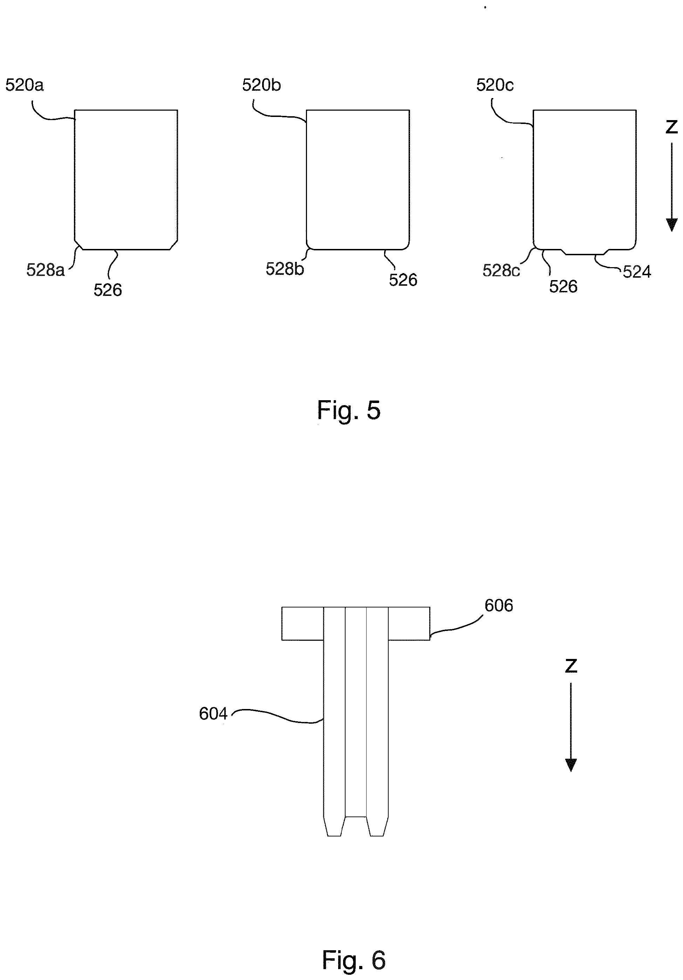

Figure 5 shows some examples of well designs, according to which the wells of the multi-well plate 218 may be configured. More specifically, Figure 5 shows a Z-profile for each well 510a, 520b, and 520c, wherein Z denotes an axis oriented in the direction of the well depth. Figure 6, on the other hand, shows an example of a Z-profile of a tip portion 604 of the syringe 104 of the pipetting robot 102, which is adapted to the respective Z-profile of the respective well 520a, 520b, 520c.

As can be seen in Figure 5, different well profiles may be used, taking into account various requirements such as an optimized utilization of the space available in the multi-well plate 218 or an optimized emptying of the well by means of the syringe 104. For example, while the well 520a has corner portions 528a at its lower end which are beveled, corresponding corner portions 528b, 528c of the wells 520b, 520c are rounded. Each of these well designs has its own advantages. Thus, on the one hand, the wells 520a, with their beveled corner portions 528a, are easier and more-cost-effective to produce. On the other hand, the wells 520b, 520c have the advantage that residual liquids at a bottom portion 526 of the respective well can be aspirated more completely due to their rounded corner portions 528b, 528c. As another example, the well 520c has a central bulge 524 at its lower end which adapts the shape of the bottom portion 526 of the well 520c to the shape of the tip portion of the syringe or pipette in order to achieve maximum liquid extraction with minimal residuals.

In any case, the Z-profiles shown in Figures 5 and 6 are adapted to each other such that the tip portion 604 of the syringe 104 can be optimally aligned in the respective well 520a, 520b, 520c. For this purpose, the tip portion 604 of the syringe 104 may be provided with a guiding sleeve 606 surrounding the outer surface of the tip portion 604. The guiding sleeve 606 can be used to center the tip portion 604 within the well 520b, 520b, 520c.

Further, the tip portion 604 of the syringe 104 may have a blunt cross-section which is adapted to a correspondingly shaped cross-section of the bottom portion 526 of the respective well 520a, 520b, 520c. Thus, the tip portion 604 is allowed to touch the bottom portion 526 of the well 520a, 520b, 520c without damaging it.

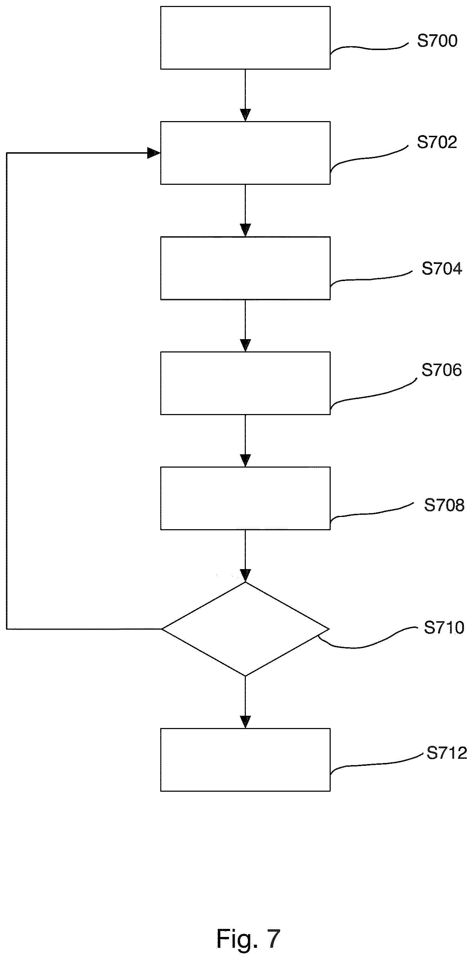

Figure 7 is a flow diagram including steps of a liquid handling method that is executed by means of the liquid handling system 100. For example, these steps may be part of a workflow that is applied in cyclic multiplexed immuno-fluorescence imaging. In such a workflow, the sample 110 may stained, imaged, and destained in multiple cycles. Within the workflow, the following explanations relate to a mixing process in which liquids held in the liquid container arrangement 106 are mixed using the pipetting robot 102. This mixing process may be carried out both before staining and before destaining.

In step S700, prior to the start of the mixing process, various types of liquids are distributed in the liquid container arrangement 106 such that each liquid is introduced, depending on its type, into at least one of the container sub-units (wells) 220 of the one-piece frame element (multi-well plate) 218. It may be assumed that the liquid types mentioned above differ in terms of the volume in which they are required in the subsequent mixing process. In particular, expensive liquids such as antibody reagents are often used in low volumes, while inexpensive ones such as buffers are needed in larger volumes. Referring to the specific example shown in Figure 2, a liquid that is required in the subsequent mixing process in a relatively high volume can be stored in the larger container sub-unit 220c. In contrast, one or more liquids that are required in the mixing process in a relatively low volume can be stored in one or more of the smaller container subunits 220a.

In step S702, the control unit 116 causes the pipetting robot 102 to move to one the container sub-units 200 of the one-piece frame element 218. The control unit 116 may determine the specific container sub-unit 220 which is to be approached by the pipetting robot 102 based on the liquid mixing protocol.

In step S704, the control unit 116 causes the pipetting robot 102 to aspirate a predefined volume of liquid from the container sub-unit 220 determined in step 702. The volume of liquid which is to be aspirated by the pipetting robot 102 may also be determined based on the liquid mixing protocol.

In step S706, the control unit 116 causes the pipetting robot 102, based on the liquid mixing protocol, to move to another one of the container sub-units 200 of the one-piece frame element 218.

In step S708, the control unit 116 causes the pipetting robot 102, based on the liquid mixing protocol, to dispense the liquid aspirated in step S704 into the container sub-unit 200 approached in step S706. The pipetting robot 102 may dispense the liquid completely or only partially into the respective container sub-unit 200. If the dispensing is complete, a first mixing operation using the liquid aspirated in step S704 is completed. If the dispensing is only partial, the remaining volume of the liquid aspirated in step S704 may be supplied to one or more further container sub-units in a manner as explained above in order to complete the first mixing operation. For more effective mixing, the liquid may also be aspirated and injected once or multiple times.

In step S710, the control unit 116 determines, based on the liquid mixing protocol, whether or not a further mixing operation is to be carried out. If yes, the further mixing operation is carried out according to steps S702 to S708 as explained above. If no, the mixing process is completed, and the control unit 116 proceeds with step S712.

In step S712, the control unit 116 causes the pump system 108 to supply one or more liquid mixtures, that have been generated as described above, from the liquid container arrangement 106 via the pipetting robot 102 to the sample 110.

It is to be noted that the actual mixing process can be carried out by the pipetting robot 102 alone. The pump system 108 is only needed to transfer the finished mixture from the liquid container arrangement 106 to the sample 110. As a result, a highly efficient mixing process can be achieved.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: liquid container arrangement
- 102: pipetting robot
- 104: syringe
- 106: liquid container arrangement
- 108: pump system
- 110: sample
- 112: flow cell
- 114: bottle container
- 116: control unit
- 218: one-piece frame element / multi-well plate
- 220: container sub-unit / well
- 222: container group / well group
- 320: container sub-unit / well
- 322: container group / well group
- 420: container sub-unit / well
- 422: container group / well group
- 520: well
- 524: bulge
- 526: bottom portion
- 528: corner portion
- 604: tip portion
- 606: guiding sleeve

## Claims

1. A liquid container arrangement (106) configured to be used in a robotic liquid handling system (100) for handling liquids which are to be applied to a sample (110), the liquid container arrangement (106) comprising:
a plurality of container sub-units (220), with at least some of the container sub-units (220a, 220b, 220c) having different liquid storage capacities,
wherein the liquid container arrangement (106) comprises a one-piece frame element (218) having said plurality of container sub-units (220) formed therein.

2. The liquid container arrangement (106) according to claim 1, comprising multiple container groups (222a, 222b, 222c), each container group (222a, 222b, 222c) including one or more of the container sub-units (220a, 220b, 220c),
wherein the container sub-units (220a, 220b, 220c) of each container group (222a, 222b, 222c) have the same liquid storage capacity, while the container sub-units of different container groups have different liquid storage capacities.

3. The liquid container arrangement (100) according to claim 1 or 2, wherein the container sub-units (220a, 220b) of each container group (222a, 222b) are located adjacent to each other, and/or
the container sub-units (220a) of each container group (222a) have the same shape, while the shapes of the container sub-units differ (220a, 420b, 420c, 420d) between at least two of the container groups (222a, 422b, 422c, 422d), and/or
at least one of the container groups (222c, 422b, 422c, 422d) includes one single container sub-unit (220c, 420b, 420c, 420d), the liquid storage capacity of said single container sub-unit (220c, 420b, 420c, 420d) being greater than the liquid storage capacity of the container sub-units (220a) of at least one of the other container groups (222a).

4. The liquid container arrangement (100) according to any one of the preceding claims, wherein the one-piece frame element is a multi-well plate (218) comprising a plurality of wells (220), each well (220) forming one of the container sub-units.

5. The liquid container arrangement (100) according to claim 4, wherein the wells (220a, 220b) included in at least one of the container groups (222a, 222b) are arranged at a center-to-center spacing which is based on a standardized spacing.

6. A robotic liquid handling system (100) for handling liquids which are to be applied to a sample (110), comprising a liquid container arrangement (106) according to any one of the preceding claims and a pipetting robot (102) having a syringe (104) which is configured to aspirate liquid from and dispense liquid into the container sub-units (220) of the liquid container arrangement (106).

7. The robotic liquid handling system (100) according to claim 6, wherein the syringe (104) comprises a guiding sleeve (606) configured to guide the syringe (104) into each container sub-unit (520a, 520b, 520c).

8. The robotic liquid handling system (100) according to claim 6 or 7, wherein each container sub-unit (520a, 520b, 520c) has a bottom portion (526) with a blunt cross-section adapted to a blunt cross-section of a tip portion (604) of the pipette (212).

9. The robotic liquid handling system (100) according to any one of the claims 6 to 8, comprising a control unit (116) configured to control the pipetting robot (102) in accordance with a predetermined liquid mixing protocol defining multiple mixing steps to be executed successively by the pipetting robot (102).

10. The robotic liquid handling system (100) according to claim 9, wherein the container sub-units (220) are located in the one-piece frame element (218) according to the liquid mixing protocol to minimize a travel path of the pipette (212) in the successively executed mixing steps.

11. The robotic liquid handling system (100) according to any one of the claims 6 to 10, comprising a pump system (108) configured to apply the liquids from the liquid container arrangement (106) to the sample (110).

12. A method for handling liquids using the robotic liquid handling system (100) according to any one of the claims 6 to 11, comprising the following steps:
distributing different types of liquids in the liquid container arrangement (106) such that each liquid is introduced, depending on its type, into at least one of the container sub-units (220) whose liquid storage capacity is assigned to the introduced type of liquid, and
mixing the different types of liquids by causing the pipetting robot (102) to aspire the liquid stored in one of the container sub-units (220) and dispense the aspired liquid into another of the container sub-units (220).

13. The method according to claim 12, wherein a mixture is generated by mixing the different types of liquids and the mixture is applied to the sample by means of a pump system (108).

14. The method according to claim 13, wherein the mixture consists exclusively of the liquids stored in the container sub-units (220).

15. The method according to any one of the claims 12 to 14, wherein the different types of liquids comprise at least two types of liquids, a first type including at least one of a staining reagent and an inactivation reagent, and a second type including at least one of a dilution buffer, a wash buffer, an imaging buffer, and
wherein the container sub-units (102, 104, 106) storing the first type of liquids have a smaller storage capacity than the container sub-units (102, 104, 106) storing the second type of liquids.
